# EUROPEAN PATENT SPECIFICATION

(11) **EP 2 981 024 B1**
(45) Date of publication and mention of the grant of the patent: **05.07.2017**
(21) Application number: 13880665.8
(22) Date of filing: 10.09.2013
(51) Int. Cl.: H04L 12/24, H04Q 11/00

(54) **METHOD AND APPARATUS FOR HOME GATEWAY PORT CONFIGURATION**
VERFAHREN UND VORRICHTUNG FÜR EINE HEIMGATEWAY-PORTKONFIGURATION
PROCÉDÉ ET APPAREIL DE CONFIGURATION DE PORT DE PASSERELLE DOMESTIQUE

(30) Priority: 28.03.2013 CN 201310105706
(43) Date of publication of application: 03.02.2016
(73) Proprietor: ZTE Corporation, Shenzhen, Guangdong 518057 (CN)
(72) Inventor: ZHU, Guangyue, Shenzhen Guangdong 518057 (CN); FU, Huaming, Shenzhen Guangdong 518057 (CN)
(74) Representative: Deambrogi, Edgardo
(86) International application number: PCT/CN2013/083248
(87) International publication number: WO 2014/153927

(56) References cited:
- WO-A1-2011/150620
- WO-A1-2011/150620
- CN-A- 101 534 460
- CN-A- 102 571 353
- CN-A- 102 571 353
- CN-A- 103 188 109
- US-A1- 2009 116 498
- "ONU management and control interface (OMCI) specification; G.988 (10/12)", ITU-T STANDARD, INTERNATIONAL TELECOMMUNICATION UNION, GENEVA ; CH, no. G.988 (10/12), 29 October 2012 (2012-10-29), pages 1-594, XP017578308, [retrieved on 2013-07-12]

## Description

### Technical Field

The present disclosure relates to the field of communication, and in particular to a port configuration method and device for a Home Gateway (HG).

### Background

After an HG is plugged to a port of an Optical Network Unit (ONU), it is necessary to perform matching on the ONU to confirm whether a Media Access Control (MAC) address of the HG is within a feature code range of the ONU or not, and then report the HG to an upper-level network element management system (also referred to as Element Management System, abbreviated as EMS) after the confirmation.

At present, almost all manufacturers adopt a solution of storing feature codes plus wildcard characters in ONUs for matching, for example, storing a string like "98F5376EXXXX" with the last four bits thereof being a wildcard character, and if a MAC address of a plugged HG is "98F5376E4F88" within its range, the ONU reports the HG to an upper-level element manager. By such a solution, a certain requirement may be met, and most of illegal HGs may be intercepted, but it is impossible to solve a further problem, which is to completely achieve a precise matching effect because the wildcard characters have broadened an original range of feature code segments, which may cause the false reporting of some HGs which are not within the range of the feature code segments but are matched with the wildcard characters.

For the problem in a related art, there is yet no effective solution.

WO 2011 150620 A1, US 2009 116498 A1 and CN 102571353 A provide respective technical solutions; however, the above mentioned further problem still remains unsolved.

### Summary

For the technical problems of false reporting of an illegal HG and the like in a feature code matching process of a port data configuration solution in the related art, the embodiments of the present disclosure provide a port configuration method and device for an HG, so as to at least solve the problems.

According to one embodiment of the present disclosure, a port configuration method for an HG is provided according to the features of appended independent claim 1. In an example embodiment, before performing, on the ONU, the first matching on the feature code reported by the HG, the method further includes: receiving, by virtue of the ONU, the feature code segments used for the first matching from the EMS.

In an example embodiment, the method further includes: storing, on the ONU, a feature code of an HG to which the port data configuration information has been transmitted; during switching access of the HG and a Personal Computer (PC), when the stored feature code is consistent with a feature code received by the ONU, determining that it is the HG which accesses a network; and when the stored feature code is inconsistent with the feature code received by the ONU, determining that it is the PC which accesses a network.

According to another embodiment of the present disclosure, a port configuration device for an HG is provided according to the features of appended independent claim 4. In an example embodiment, the device further includes: a receiving component, configured to receive, by virtue of the ONU, the feature code segments used for the first matching from the EMS.

In an example embodiment, the device further includes: a storage component, configured to store, on the ONU, a feature code of an HG to which the port data configuration information has been transmitted; and a determination component, configured to, during switching access of the HG and a PC, determine that it is the HG which accesses a network when the stored feature code is consistent with a feature code received by the ONU, and determine that it is the PC which accesses a network when the stored feature code is inconsistent with the feature code received by the ONU.

According to the embodiments of the present disclosure, matching on the feature code reported by the HG is performed twice on the ONU and the EMS, so that the technical problems of false reporting of an illegal HG and the like in the feature code matching process of the port data configuration solution in the related art are solved, and the access of an HG not within the range of feature codes is avoided.

### Brief Description of the Drawings

The drawings described here are adopted to provide further understanding of the present disclosure, and form a part of the present disclosure. Schematic embodiments of the present disclosure and description thereof are adopted to explain the present disclosure and not intended to form improper limits to the present disclosure. In the drawings:
Fig. 1 is a flowchart of a port configuration method for an HG according to an embodiment of the present disclosure;
Fig. 2 is a structure diagram of a port configuration device for an HG according to an embodiment of the present disclosure;
Fig. 3 is another structure diagram of a port configuration device for an HG according to an embodiment of the present disclosure;
Fig. 4 is a flowchart of linking an HG to an ONU for the first time according to an embodiment of the present disclosure;
Fig. 5 is a flowchart of port configuration during switching of a PC and an HG linked to an ONU according to an embodiment of the present disclosure;
Fig. 6 is an operation flowchart when an HG is linked to an ONU according to an embodiment of the present disclosure; and
Fig. 7 is a functional flowchart of accurate matching when an HG is linked to an ONU according to an embodiment of the present disclosure.

### Detailed Description of the Embodiments

The present disclosure is described below with reference to the drawings and embodiments in detail. It is important to note that the embodiments in the present disclosure and characteristics in the embodiments can be combined under the condition of no conflicts.

### Embodiment 1

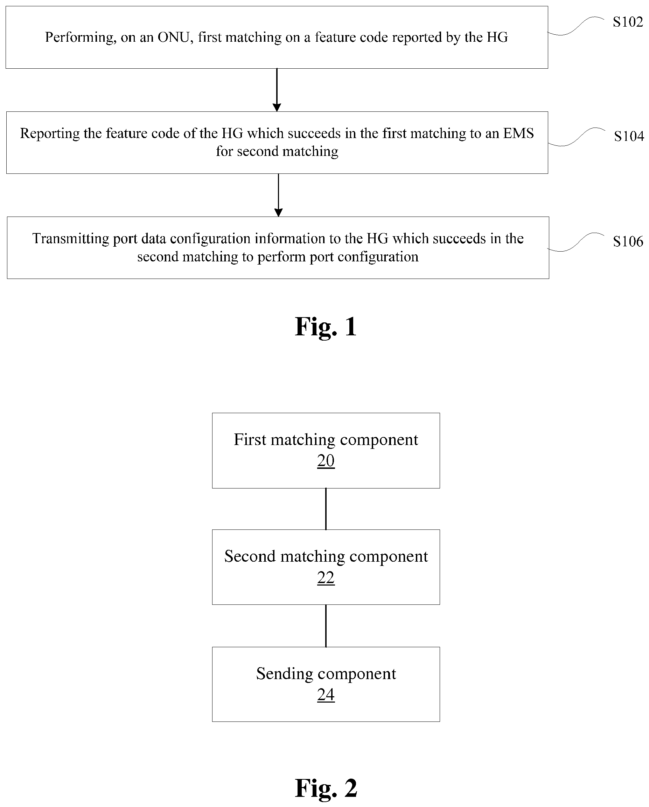

Fig. 1 is a flowchart of a port configuration method for an HG according to an embodiment of the present disclosure. As shown in Fig. 1, the method includes the following Steps S102 to S106:
Step S102: first matching on a feature code reported by the HG is performed on an ONU;
Step S104: the feature code of the HG which succeeds in the first matching is reported to an EMS for second matching; and
Step S106: port data configuration information is transmitted to the HG which succeeds in the second matching to perform port configuration.

By each processing step, the feature code of the HG is matched twice on the ONU and the EMS, so that reporting of feature codes of illegal HGs is further reduced, that is, access of an HG not within the range of feature codes is avoided.

In Step S102, there are many implementation manners for the first matching. For example, matching verification may be conducted according to wildcard characters on the ONU, specifically as follows: the first matching on the feature code reported by the HG and feature code segments on the ONU is performed on the ONU, wherein the feature code segments on the ONU include: feature codes and wildcard characters of HGs.

In Step S104, there are also many manners for the second matching as long as HGs not meeting a requirement are further filtered or accuracy of the second matching is higher than accuracy of the first matching. Specifically, the second matching is performed on the feature code of the HG which succeeds in the first matching and feature code segments on the EMS, wherein the feature code segments on the EMS consist of feature codes of the HGs. The feature code segments on the EMS only consist of the feature codes of the HGs, so that the feature code segments on the EMS are more accurate than the feature code segments including the wildcard characters.

In an example implementation mode of the embodiment, Step S102 to Step S106 may be implemented in a form as follows. Most of illegal HGs are filtered on the ONU through the wildcard characters. Completely accurate matching is performed according to the feature code segments on the EMS after the ONU confirms and reports a legal HG to the EMS, if the feature code of the HG is within a feature code range, the HG is determined to be a legal HG, and an HG scenario configuration is transmitted to the current port of the ONU; otherwise the HG is considered as an illegal HG, and the EMS discards a notice and does not perform any processing.

In the embodiment, before performing, on the ONU, the first matching on the feature code reported by the HG, the feature code segments used for the first matching are received from the EMS by virtue of the ONU. During specific implementation, the following implementation may be adopted:
Step 1: feature code segments of HGs are created on the EMS; and
Step 2: an ONU is registered on an Optical Line Terminal (OLT), and the EMS combines the created feature code segments into wildcard characters, and transmits the wildcard characters to the ONU.

In the related art, a user may directly connect the PC to the ONU for network access without the HG, and port data configurations of the ONU in the two scenarios may be different. In such a case, the PC may also be falsely reported as an HG by the ONU, and the EMS may transmit a port data configuration of an HG scenario, which may finally disable the user to access a network. In order to solve the problem, a solution adopted by the embodiment is as follows: a feature code of an HG to which the port data configuration information has been transmitted is stored on the ONU; during switching access of the HG and the PC, if the stored feature code is consistent with a feature code received by the ONU, it is determined that it is the HG which accesses the network; and when the stored feature code is inconsistent with the feature code received by the ONU, it is determined that it is the PC which accesses the network. During specific implementation, the above process may be implemented in, but not limited to, a form which is described in detail as follows.

In order to support normal switching of data configuration during the switching of the PC and the HG, a function of recording a feature code of a current HG is added to the ONU, that is, when an HG accesses the network, the feature code of the current HG is recorded into a Flash of the ONU. During the switching of the PC and the HG, a current MAC address of a packet received from the port is obtained to judge whether the MAC address is consistent with the recorded feature code of the current HG, and if the MAC address is consistent with the red feature code of the current HG, it is determined that it is the HG which accesses the network, and the configuration is switched to an HG scenario configuration; otherwise it is determined that it is the PC which accesses the network, and the configuration is switched to a PC scenario configuration.

The embodiment further provides a port configuration device for an HG, which is configured to implement the abovementioned embodiment and example implementation mode, what has been described will not be repeated, and components involved in the device are described below. For example, a term "component", used below, is a combination of software and/or hardware capable of realizing preset functions. The device described in the following embodiment is preferably implemented by software, but the implementation of the device with hardware or the combination of software and hardware is also possible and conceivable. Fig. 2 is a structure diagram of a port configuration device for an HG according to an embodiment of the present disclosure. As shown in Fig. 2, the device includes:
a first matching component 20, coupled with a second matching component 22 and configured to perform, on an ONU, first matching on a feature code reported by the HG;
the second matching component 22, coupled with a sending component 24 and configured to report the feature code of the HG which succeeds in the first matching to an EMS for second matching; and
the sending component 24, configured to transmit port data configuration information to the HG which succeeds in the second matching to perform port configuration.

By functions realized by each abovementioned components, access of the HG not within the range of feature codes may be avoided.

In the embodiment, the first matching component 20 is further configured to perform, on the ONU, the first matching on the feature code reported by the HG and feature code segments on the ONU, wherein the feature code segments on the ONU include: feature codes and wildcard characters of HGs.

In the embodiment, the second matching component 22 is further configured to perform the second matching on the feature code of the HG which succeeds in the first matching and feature code segments on the EMS, wherein the feature code segments on the EMS consist of feature codes of the HGs.

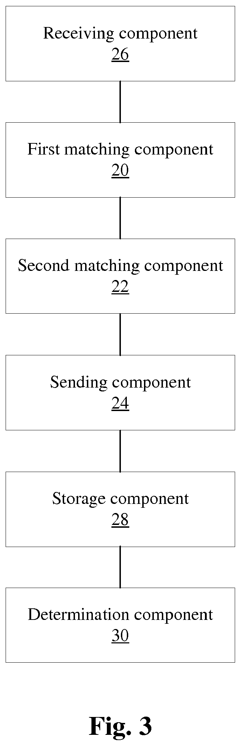

In the embodiment, as shown in Fig. 3, the device may further include, but not limited to, the following component: a receiving component 26, coupled with the first matching component 20 and configured to receive, by virtue of the ONU, the feature code segments used for the first matching from the EMS.

In the embodiment, as shown in Fig. 3, the device may further include, but not limited to: a storage component 28, coupled with a determination component 30 and configured to store, on the ONU, a feature code of an HG to which the port data configuration information has been transmitted; and the determination component 30 is configured to, during switching access of the HG and a PC, determine that it is the HG which accesses a network when the stored feature code is consistent with a feature code received by the ONU, and determine that it is the PC which accesses a network when the stored feature code is inconsistent with the feature code received by the ONU.

It is important to note that functions of the abovementioned components may be realized through one or more corresponding processors.

In order to better understand embodiment 1, description is given below with reference to embodiments 2-3 and the related drawings.

### Embodiment 2

The embodiment is intended to solve a problem of incapability in completely accurate matching of a feature code of an HG and false reporting of an illegal HG and a problem about port data configuration switching during switching of a PC and an HG in a related art.

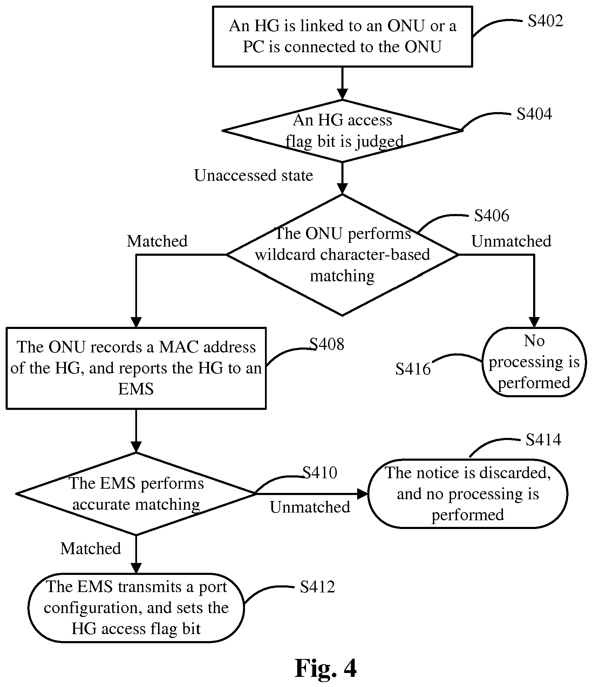

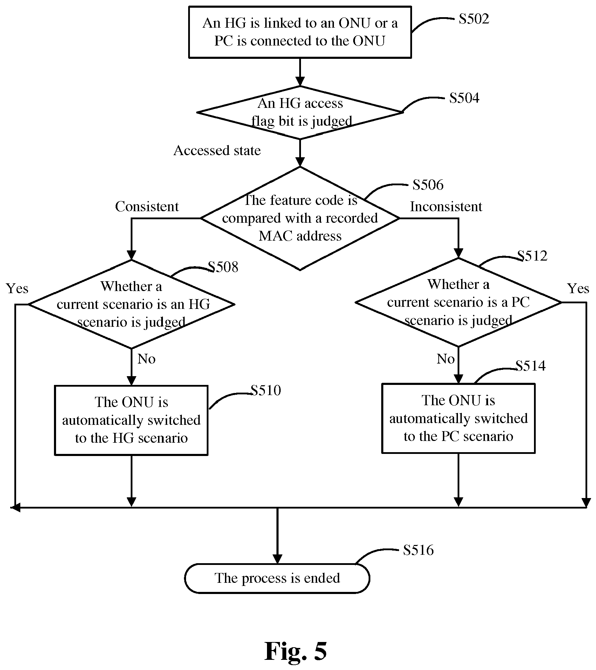

In order to solve the problems, the technical solution of the embodiment is implemented as follows.
1: feature code segments of HGs are created on an EMS.
   For example, a first segment "00-74-04-00-00-00 --- 00-74-04-FF-FF-FF", and a second segment "00-01-02-03-00-00 --- 00-01-02-03-FF-FF".
2: an ONU is registered on an OLT, and the EMS combines the created feature code segments into wildcard characters, and transmits the wildcard characters to the ONU.
3: the feature code segments (including the wildcard characters) may be seen on an ONU configuration.
   mac=000000000000
   manage_vlan=3999
   port=-1
   status=0
   mac[0]=007404XXXXXX
   mac[1]=00010203XXXX
4: when an HG linked to the ONU is powered on, the ONU judges whether the current port is bound with an HG or not according to an HG access flag bit, and if the bit indicates "NO", it represents that it is the first time that the port reports an HG, a network access flow of the HG is started. The flow mainly includes two processing steps: A, the ONU performs feature code matching, if the feature code of the HG is within a range, the HG is reported to the EMS and a MAC feature code of the HG is recorded; otherwise the HG is considered as an illegal HG, and no processing is performed; and B, the EMS performs accurate matching on the MAC feature code of the HG after receiving the report from the ONU, if the HG passes the accurate matching, the EMS transmits a port data configuration of the HG, and if the HG does not pass the accurate matching, the EMS discards the notice and does not perform any processing. As shown in Fig. 4, the above processing procedure specifically includes the following processing steps:
   Step S402: the HG is linked to an ONU or a PC is connected to the ONU;
   Step S404: whether the port is bound with an HG or not is judged, that is, whether an HG access flag bit indicates an unaccessed state or not is judged, and Step S406 is executed if it is judged that the port is bound with an HG;
   Step S406: the ONU performs wildcard character-based matching, and Step S408 is executed if the matching is successful, otherwise Step S416 is executed;
   Step S408: the ONU records a MAC address of the HG, and reports the HG to the EMS;
   Step S410: the EMS performs accurate matching, and Step S412 is executed if the accurate matching is successful, otherwise Step S414 is executed;
   Step S412: the EMS transmits the port configuration, and sets the HG access flag bit;
   Step S414: the notice is discarded, and no processing is performed; and
   Step S416: no processing is performed.
5: in the embodiment, if the port has been bound with an HG and the HG is in an accessed state, the reported feature code of the HG is compared with the MAC address recorded in the ONU, and the process mainly includes: A, if the reported feature code is consistent with the MAC address recorded in the ONU, whether a current configuration is an HG scenario configuration or not is judged, the current configuration is automatically converted into the HG scenario configuration if the current configuration is not the HG scenario configuration, otherwise no processing is performed; and B, if the reported feature code is inconsistent with the MAC address recorded in the ONU, it represents that equipment which is accessing the network is different from the HG registered before, and the current feature code may be a MAC address reported by other equipment such as the PC, then whether the current configuration is a PC scenario configuration or not is judged, the current configuration is automatically converted into the PC scenario configuration if the current configuration is not the PC scenario configuration, otherwise no processing is performed. As shown in Fig. 5, the procedure specifically includes the following processing steps:
   Step S502: the HG is linked to the ONU or the PC is connected to the ONU;
   Step S504: whether the port is bound with an HG or not is judged, that is, whether an HG access flag bit indicates an accessed state or not is judged, and Step S506 is executed if the HG access flag bit indicates the accessed state;
   Step S506: the feature code is compared with the recorded feature code, such as the MAC address, of the HG, Step S508 is executed if the feature code is consistent with the recorded feature code, otherwise Step S512 is executed;
   Step S508: whether a current scenario is an HG scenario or not is judged, Step S516 is executed if the current scenario is the HG scenario, otherwise Step S510 is executed;
   Step S510: the ONU is automatically switched to the HG scenario, and then Step S516 is executed;
   Step S512: whether the current scenario is a PC scenario or not is judged, Step S516 is executed if the current scenario is the PC scenario, otherwise Step S514 is executed;
   Step S514: the ONU is automatically switched to the PC scenario, and then Step S516 is executed; and
   Step S516: the process is ended.

### Embodiment 3

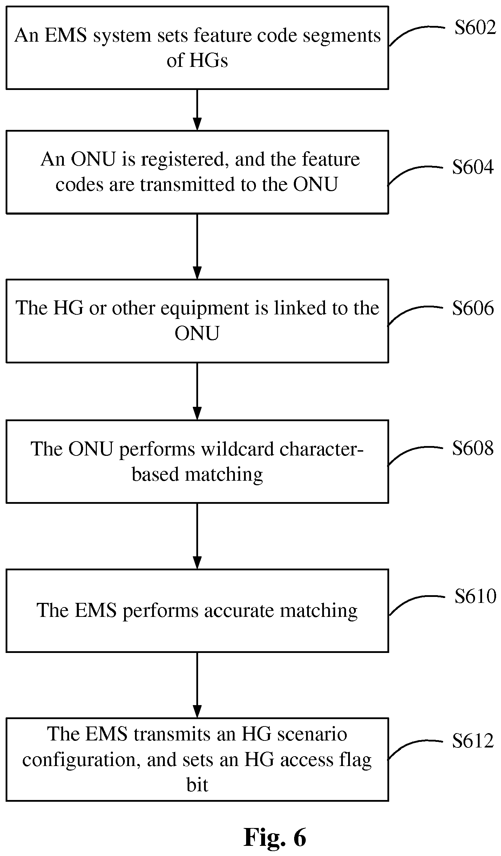

Fig. 6 is an operation flowchart when an HG is linked to an ONU according to an embodiment of the present disclosure. As shown in Fig. 6, the flow includes:
Step S602: an EMS system sets feature code segments of HGs;
Step S604: an ONU is registered, and the feature codes are transmitted to the ONU;
Step S606: the HG or other equipment is linked to the ONU;
Step S608: wildcard character-based matching is performed on the ONU;
Step S610: accurate matching is performed on the EMS; and
Step S612: the EMS transmits an HG scenario configuration, and sets an HG access flag bit.

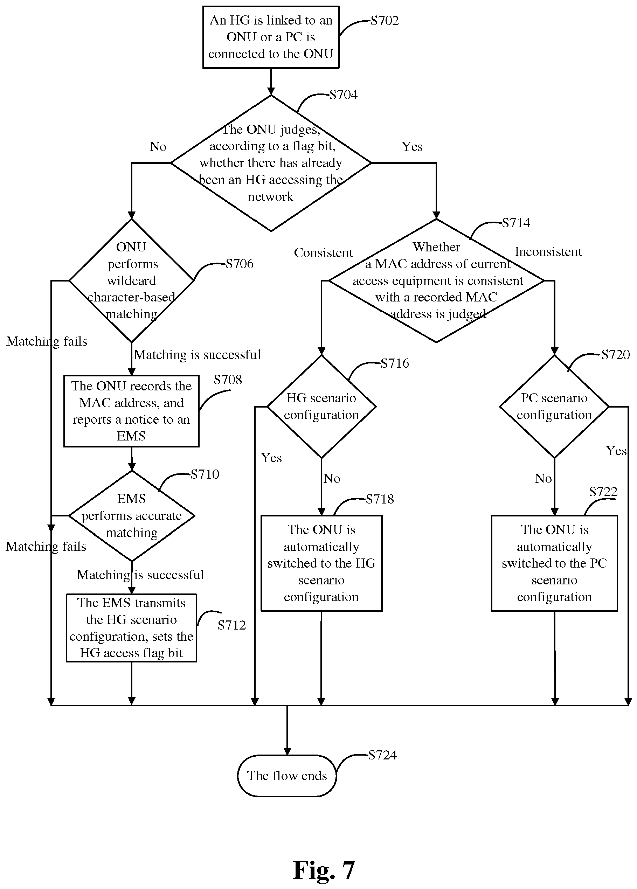

Fig. 7 is a functional flowchart of accurate matching when an HG is linked to an ONU according to an embodiment of the present disclosure. As shown in Fig. 7, the flow includes:
Step S702: an HG is linked to an ONU or a PC is connected to the ONU;
Step S704: the ONU judges, according to a flag bit, whether there has already been an HG accessing the network, Step S714 is executed if there has already been an HG accessing the network, otherwise Step S706 is executed;
Step S706: wildcard character-based matching is performed on the ONU, and Step S708 is executed if the wildcard character-based matching is successful;
Step S708: the ONU records a MAC address, and reports a notice to an EMS;
Step S710: accurate matching is performed on the EMS, and Step S712 is executed if the accurate matching is successful;
Step S712: the EMS transmits an HG scenario configuration, sets the HG access flag bit, and then Step S724 is executed;
Step S714: whether a MAC address of current access equipment is consistent with the recorded MAC address or not is judged, Step S716 is executed if the MAC address of the current access equipment is consistent with the recorded MAC address, otherwise Step S720 is executed;
Step S716: whether a current scenario is an HG scenario or not is judged, Step S724 is executed if the current scenario is the HG scenario, otherwise Step S718 is executed;
Step S718: the ONU is automatically switched to an HG scenario configuration, and Step S724 is executed;
Step S720: whether the current scenario is a PC scenario or not is judged, Step S724 is executed if the current scenario is the PC scenario, otherwise Step S722 is executed;
Step S722: the ONU is automatically switched to the PC scenario configuration; and
Step S724: the flow ends.

In another embodiment, software is further provided, which is configured to execute the technical solutions described in the abovementioned embodiments and example implementation modes.

In another embodiment, a storage medium is further provided, in which the abovementioned software is stored, the storage medium including, but not limited to: a compact disc, a floppy disk, a hard disk, an erasable memory and the like.

Obviously, those skilled in the art should know that each component or step of the present disclosure may be implemented by a universal computing device, and the components or steps can be concentrated on a single computing device or distributed on a network formed by a plurality of computing devices, and may optionally be implemented by programmable codes executable for the computing devices, so that the components or steps may be stored in a storage device for execution with the computing devices, or the shown or described steps may be executed in a sequence different from the sequence here under a certain condition, or the components or steps may form each integrated circuit component, or multiple components or steps therein may form a single integrated circuit component for implementation. As a consequence, the present disclosure is not limited to any specific hardware and software combination.

The above is only the example embodiment of the present disclosure and not intended to limit the present disclosure, and for those skilled in the art, the present disclosure may have various modifications and variations. Any modifications, equivalent replacements, improvements and the like within the principle of the present disclosure shall fall within the scope of protection defined by the claims of the present disclosure.

### Industrial Applicability

The technical solutions provided by the present disclosure may be applied to a port configuration process of an HG, and matching on a feature code reported by the HG is performed twice on an ONU and an EMS, so that the technical problems of false reporting of an illegal HG and the like in a feature code matching process of the port data configuration solution in the related art are solved, and the access of an HG not within the range of feature codes is avoided.

## Claims

1. A port configuration method for a Home Gateway, HG, comprising:
performing, on an Optical Network Unit, ONU, first matching on a feature code reported by the HG (S102), wherein performing, on the ONU, the first matching on the feature code reported by the HG comprises: performing, on the ONU, the first matching on the feature code reported by the HG and feature code segments on the ONU, wherein the feature code segments on the ONU comprise: feature codes and wildcard characters of HGs;
reporting the feature code of the HG which succeeds in the first matching to an Element Management System, EMS, for second matching (S104), wherein reporting the feature code of the HG which succeeds in the first matching to the EMS for second matching comprises: reporting the feature code of the HG which succeeds in the first matching to the EMS, so as to enable the EMS to perform the second matching on the feature code of the HG which succeeds in the first matching and feature code segments on the EMS, wherein the feature code segments on the EMS consist of feature codes of the HGs; and
transmitting port data configuration information to the HG which succeeds in the second matching to perform port configuration (S106).

2. The method as claimed in claim 1, wherein before performing, on the ONU, the first matching on the feature code reported by the HG (S102), the method further comprises:
receiving, by virtue of the ONU, the feature code segments used for the first matching from the EMS.

3. The method as claimed in claim 1 or 2, further comprising:
storing, on the ONU, a feature code of an HG to which the port data configuration information has been transmitted;
during switching access of the HG and a Personal Computer, PC, when the stored feature code is consistent with a feature code received by the ONU, determining that it is the HG which accesses a network; and when the stored feature code is inconsistent with the feature code received by the ONU, determining that it is the PC which accesses a network.

4. A port configuration device for a Home Gateway, HG, comprising:
a first matching component (20), configured to perform, on an Optical Network Unit, ONU, first matching on a feature code reported by the HG, wherein the first matching component (20) is configured to perform, on the ONU, the first matching on the feature code reported by the HG and feature code segments on the ONU, wherein the feature code segments on the ONU comprise: feature codes and wildcard characters of HGs;
a reporting component (22), configured to report the feature code of the HG which succeeds in the first matching to an Element Management System, EMS, for second matching, wherein the reporting component (22) is configured to report the feature code of the HG which succeeds in the first matching to the EMS, so as to enable the EMS to perform the second matching on the feature code of the HG which succeeds in the first matching and feature code segments on the EMS, wherein the feature code segments on the EMS consist of feature codes of the HGs; and
a sending component (24), configured to transmit port data configuration information to the HG which succeeds in the second matching to perform port configuration.

5. The device as claimed in claim 4, further comprising:
a receiving component (26), configured to receive, by virtue of the ONU, the feature code segments used for the first matching from the EMS.

6. The device as claimed in claim 4 or 5, further comprising:
a storage component (28), configured to store, on the ONU, a feature code of an HG to which the port data configuration information has been transmitted; and
a determination component (30), configured to, during switching access of the HG and a Personal Computer, PC, determine that it is the HG which accesses a network when the stored feature code is consistent with a feature code received by the ONU, and determine that it is the PC which accesses a network when the stored feature code is inconsistent with the feature code received by the ONU.

## Patentansprüche

1. Anschlusskonfigurationsverfahren für ein Heim-Gateway, HG, umfassend:
Ausführen, auf einer optischen Netzwerkeinheit, ONU, einer ersten Abgleichung an einem Merkmalscode, der vom HG gemeldet wird (S102), wobei das Ausführen, auf der ONU, der ersten Abgleichung an dem Merkmalscode, der vom HG gemeldet wird, umfasst: Ausführen, auf der ONU, der ersten Abgleichung an dem Merkmalscode, der vom HG gemeldet wird, und Merkmalscodesegmenten auf der ONU, wobei die Merkmalscodesegmente auf der ONU umfassen: Merkmalscodes und Platzhalterzeichen von HGs;
Melden des Merkmalscodes des HG, der bei der ersten Abgleichung erfolgreich ist, an ein Elementverwaltungssystem, EMS, für eine zweite Abgleichung (S104), wobei das Melden des Merkmalscodes des HG, der bei der ersten Abgleichung erfolgreich ist, an das EMS für eine zweite Abgleichung, umfasst: Melden des Merkmalscodes des HG, der bei der ersten Abgleichung erfolgreich ist, an das EMS, um es dem EMS zu ermöglichen, die zweite Abgleichung an dem Merkmalscode des HG, der bei der ersten Abgleichung erfolgreich ist, und von Merkmalscodesegmenten auf dem EMS auszuführen, wobei die Merkmalscodesegmente auf dem EMS aus Merkmalscodes der HGs bestehen; und
Übertragen von Anschlussdatenkonfigurationsinformationen an das HG, das bei der zweiten Abgleichung erfolgreich ist, um eine Anschlusskonfiguration auszuführen (S106).

2. Verfahren nach Anspruch 1, wobei vor der Ausführung, auf der ONU, der ersten Abgleichung an dem Merkmalscode, der vom HG gemeldet wird (S102), das Verfahren ferner umfasst:
Empfangen, durch die ONU, der Merkmalscodesegmente, die für die erste Abgleichung verwendet werden, vom EMS.

3. Verfahren nach Anspruch 1 oder 2, ferner umfassend:
Speichern, auf der ONU, eines Merkmalscodes eines HG, an das die Anschlussdatenkonfigurationsinformationen übertragen wurden;
während eines Schaltzugangs des HG und eines Personalcomputers, PC, wenn der gespeicherte Merkmalscode mit einem Merkmalscode übereinstimmt, der von der ONU empfangen wurde, Bestimmen, dass es das HG ist, das auf ein Netzwerk zugreift; und, wenn der gespeicherte Merkmalscode nicht mit dem Merkmalscode übereinstimmt, der von der ONU empfangen wurde, Bestimmen, dass es der PC ist, der auf ein Netzwerk zugreift.

4. Anschlusskonfigurationsvorrichtung für ein Heim-Gateway, HG, umfassend:
eine erste Abgleichungskomponente (20), die konfiguriert ist, auf einer optischen Netzwerkeinheit, ONU, eine erste Abgleichung an einem Merkmalscode, der vom HG gemeldet wird, auszuführen, wobei die erste Abgleichungskomponente (20) konfiguriert ist, auf der ONU die erste Abgleichung an dem Merkmalscode, der vom HG gemeldet wird, und an Merkmalscodesegmenten auf der ONU auszuführen, wobei die Merkmalscodesegmente auf der ONU umfassen: Merkmalscodes und Platzhalterzeichen von HGs;
eine Meldekomponente (22), die konfiguriert ist, den Merkmalscode des HG, der bei der ersten Abgleichung erfolgreich ist, an ein Elementverwaltungssystem, EMS, für eine zweite Abgleichung zu melden, wobei die Meldekomponente (22) konfiguriert ist, den Merkmalscode des HG, der bei der ersten Abgleichung erfolgreich ist, dem EMS zu melden, um es dem EMS zu ermöglichen, die zweite Abgleichung an dem Merkmalscode des HG, der bei der ersten Abgleichung erfolgreich ist, und von Merkmalscodesegmenten auf dem EMS auszuführen, wobei die Merkmalscodesegmente auf dem EMS aus Merkmalscodes der HGs bestehen; und
eine Sendekomponente (24), die konfiguriert ist, Anschlussdatenkonfigurationsinformationen an das HG zu übertragen, das bei der zweiten Abgleichung erfolgreich ist, um eine Anschlusskonfiguration auszuführen.

5. Vorrichtung nach Anspruch 4, ferner umfassend:
eine Empfangskomponente (26), die konfiguriert ist, durch die ONU die Merkmalscodesegmente zu empfangen, die für die erste Abgleichung vom EMS verwendet wurden.

6. Vorrichtung nach Anspruch 4 oder 5, ferner umfassend:
eine Speicherkomponente (28), die konfiguriert ist, auf der ONU einen Merkmalscode eines HG zu speichern, zu dem die Anschlussdatenkonfigurationsinformationen übertragen wurden; und
eine Bestimmungskomponente (30), die konfiguriert ist, während eines Schaltzugangs des HG und eines Personalcomputers, PC, zu bestimmen, dass es die HG ist, die auf ein Netzwerk zugreift, wenn der gespeicherte Merkmalscode mit einem Merkmalscode übereinstimmt, der von der ONU erhalten wurde, und zu bestimmen, dass es der PC ist, der auf ein Netzwerk zugreift, wenn der gespeicherte Merkmalscode nicht mit dem Merkmalscode übereinstimmt, der von der ONU erhalten wurde.

## Revendications

1. Procédé de configuration de port pour une passerelle domestique, HG, consistant à :
réaliser, sur une unité de réseau optique, ONU, une première mise en correspondance sur un code caractéristique rapporté par la HG (S 102), dans lequel la réalisation, sur l'ONU, de la première mise en correspondance sur le code caractéristique rapporté par la HG comprend : réaliser, sur l'ONU, la première mise en correspondance sur le code caractéristique rapporté par la HG et des segments de code caractéristique sur l'ONU, dans lequel les segments de code caractéristique sur l'ONU comprennent : des codes caractéristiques et des caractères génériques des HG ;
rapporter le code caractéristique de la HG qui réussit dans la première mise en correspondance à un système de gestion d'élément, EMS, pour une seconde mise en correspondance (S 104), dans lequel le rapport du code caractéristique de la HG qui réussit dans la première mise en correspondance à l'EMS pour la seconde mise en correspondance comprend : rapporter le code caractéristique de la HG qui réussit dans la première mise en correspondance à l'EMS, de manière à permettre à l'EMS de réaliser la seconde mise en correspondance sur le code caractéristique de la HG qui réussit dans la première mise en correspondance et les segments de code caractéristique sur l'EMS, dans lequel les segments de code caractéristique sur l'EMS se composent de codes caractéristiques des HG ; et
transmettre des informations de configuration de données de port à la HG qui réussit dans la seconde mise en correspondance afin de réaliser la configuration de port (S106).

2. Procédé selon la revendication 1, dans lequel, avant de réaliser, sur l'ONU, la première mise en correspondance sur le code caractéristique rapporté par la HG (S102), le procédé comprend en outre :
recevoir, au moyen de l'ONU, les segments de code caractéristique utilisés pour la première mise en correspondance en provenance de l'EMS.

3. Procédé selon la revendication 1 ou 2, comprenant en outre :
stocker, sur l'ONU, un code caractéristique d'une HG à laquelle les informations de configuration de données de port ont été transmises ;
pendant la commutation d'accès de la HG et d'un ordinateur personnel, PC, lorsque le code caractéristique stocké est cohérent avec un code caractéristique reçu par l'ONU, déterminer qu'il s'agit de la HG qui accède à un réseau ; et lorsque le code caractéristique stocké n'est pas cohérent avec le code caractéristique reçu par l'ONU, déterminer qu'il s'agit du PC qui accède à un réseau.

4. Appareil de configuration de port pour une passerelle domestique, HG, comprenant :
un premier composant de mise en correspondance (20), agencé pour réaliser, sur une unité de réseau optique, ONU, une première mise en correspondance sur un code caractéristique rapporté par la HG, dans lequel le premier composant de mise en correspondance (20) est agencé pour réaliser, sur l'ONU, la première mise en correspondance sur le code caractéristique rapporté par la HG et des segments de code caractéristique sur l'ONU, dans lequel les segments de code caractéristique sur l'ONU comprennent : des codes caractéristiques et des caractères génériques des HG ;
un composant de rapport (22) agencé pour rapporter le code caractéristique de la HG qui réussit dans la première mise en correspondance avec un système de gestion d'élément, EMS, pour une seconde mise en correspondance, dans lequel le composant de rapport (22) est agencé pour rapporter le code caractéristique de la HG qui réussit dans la première mise en correspondance à l'EMS, de manière à permettre à l'EMS de réaliser la seconde mise en correspondance sur le code caractéristique de la HG qui réussit dans la première mise en correspondance et les segments de code caractéristique sur l'EMS, dans lequel les segments de code caractéristique sur l'EMS se composent de codes caractéristiques des HG ; et
un composant d'envoi (24) agencé pour transmettre des informations de configuration de données de port à la HG qui réussit dans la seconde mise en correspondance afin de réaliser la configuration de port.

5. Appareil selon la revendication 4, comprenant en outre :
un composant de réception (26) agencé pour recevoir, au moyen de l'ONU, les segments de code caractéristique utilisés pour la première mise en correspondance en provenance de l'EMS.

6. Appareil selon la revendication 4 ou 5, comprenant en outre :
un composant de stockage (28) agencé pour stocker, sur l'ONU, un code caractéristique d'une HG à laquelle les informations de configuration de données de port ont été transmises ; et
un composant de détermination (30) agencé pour, pendant la commutation d'accès de la HG et d'un ordinateur personnel, PC, déterminer qu'il s'agit de la HG qui accède à un réseau lorsque le code caractéristique stocké est cohérent avec un code caractéristique reçu par l'ONU et déterminer qu'il s'agit du PC qui accède à un réseau lorsque le code caractéristique stocké n'est pas cohérent avec le code caractéristique reçu par l'ONU.
